Europäisches Patentamt

(19) European Patent Office    (11) Publication number: **0 196 924**
                                                      **B1**
Office européen des brevets

(12) **EUROPEAN PATENT SPECIFICATION**

(45) Date of publication of the patent specification:    (51) Int. Cl.⁵: **B60P 3/08**
14.11.90

(21) Application number: **86302455.0**

(22) Date of filing: **03.04.86**

(54) Transporter.

(30) Priority: **04.04.85  GB 8508979**          (73) Proprietor: **Walker Tridex Limited, Walker House**
**06.11.85  GB 8527358**                    **Malinslee, Telford, Shropshire TF3 4HA(GB)**

(43) Date of publication of application:          (72) Inventor: **Prestage, Anthony John, 34 Thornby Avenue,**
**08.10.86 Bulletin 86/41**                 **Solihull West Midlands B91 2BJ(GB)**

(45) Publication of the grant of the patent:       (74) Representative: **Craske, Stephen Allan, Craske &**
**14.11.90 Bulletin 90/46**                 **Co. 1 Southernhay West, Exeter, South Devon**
                                           **EX1 1JG(GB)**

(84) Designated Contracting States:
**AT BE CH DE FR GB IT LI LU NL SE**

(56) References cited:
**GB-A- 1 183 818**
**GB-A- 2 139 968**
**US-A- 2 039 492**

ACTORUM AG

## Description

This invention relates to transporters for motor vehicles.

Car transporters carrying anything up to seven average size family saloons are familiar vehicles on our roads, but with rising fuel and maintenance costs there is a need for a transporter capable of carrying additional payloads. Previous attempts at solving this problem have always taken a penalty with height and loading times.

GB-A 2 139 968 and GB-A 1 183 818 both disclose a transporter for motor vehicles, comprising a wheeled chassis including a lower deck and a raised forward deck, an upper deck supported from the chassis and arranged such that its rear end can be lowered for loading and unloading, and a middle deck which is positioned vertically between the upper and lower decks and is adjustable in height.

According to the present invention, the forward end of the middle deck ends in close proximity to the rear end of the forward deck enabling vehicles to be loaded on and off said forward deck via the middle deck.

The invention will now be exemplified with reference to the accompanying drawings, in which:

Figure 1 is a side view of the trailer section of an articulated transporter in accordance with the invention, with the desks shown in their normal travelling positions,

Figure 2 is a similar view of the trailer showing the decks in their loading and unloading positions,

Figure 3 shows a locking arrangement of the decks,

Figure 4 shows the arrangement for raising and lowering the middle deck, and

Figure 5 is a sectional detail of the bogie arrangement employed in the transporter.

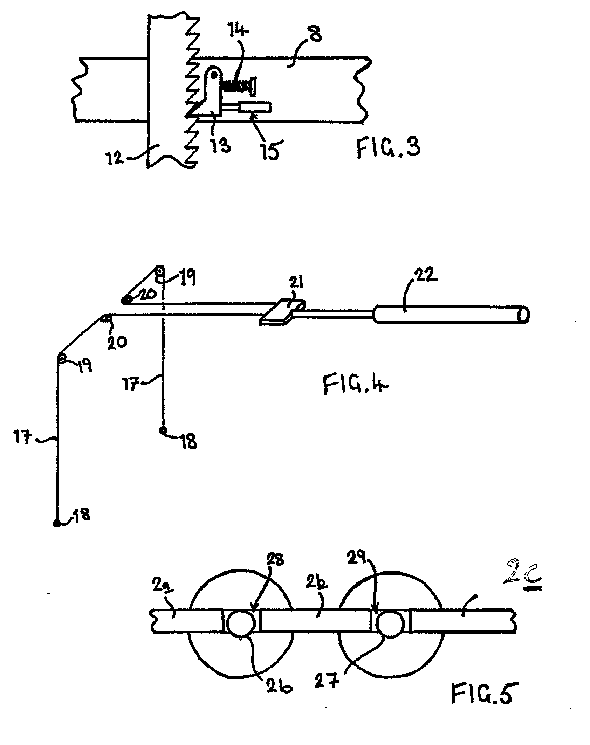

The trailer comprises a chassis 1 including a lower deck 2 and a front deck 3 located over a tractor (not shown). The chassis has a rear bogie 4 and auxiliary wheels 5 which can be lowered to support the front of the chassis. The chassis carries a pair of front columns 6 and a pair of rear columns 7 which vertically guide and longitudinally locate a top deck 8. The top deck can be raised and lowered at both ends of the trailer by front rams 9 and rear rams 10 pivotally coupled to the top deck and the chassis. The rams are mounted upside down (cylinders uppermost) so that rainwater tends to run out of the outer sections reducing the risk of corrosion. Each front ram 9 is provided with a threaded extension which projects through a top wall of the respective column 6 and carries a locking nut 11. The nut can be tightened down to lock the upper deck when travelling. Each rear column 7 carries a ratchet 12 (Fig. 3) which is co-operable with a pawl 13 pivoted to the upper deck 8. The pawl is loaded into engagement with the ratchet by a spring 14, and a ram 15 allows the pawl to be disengaged. The pawl therefore allows the rear of the deck to be raised but it can only be lowered on actuation of ram 15.

A middle deck 16 is suspended from the top deck 8 by front and rear pairs of wire ropes 17. As shown in Fig. 4, each pair of ropes are joined to the middle deck at 18 and travel over pulleys 19, 20 to the centre of the upper deck where they travel longitudinally to a common block 21 connected to a ram 22. A similar arrangement is provided for both the front and rear pairs of ropes so that the front and rear of the deck can be raised and lowered independently. The middle deck is vertically guided and longitudinally located at the front by a pair of supports 23 extending downwardly from the top deck and at the rear by rear columns 7. The rear of middle deck 16 is lockable by a further hydraulically releasable spring loaded pawl, again co-operating with the ratchet 12. The front can be locked by tightening screws 24 into contact with the deck.

Ramps 25, which are usually stowed in the chassis, are provided for loading and unloading.

The bogie 4 has twin axles 26, 27 (Fig. 5). The lower deck 2 is divided into sections 2a - c and the axles are mounted in gaps 28, 29 between the deck sections so that the upper surface of the axles forms part of the deck. The portion of the lower deck in the region of the bogie can therefore be substantially reduced in height.

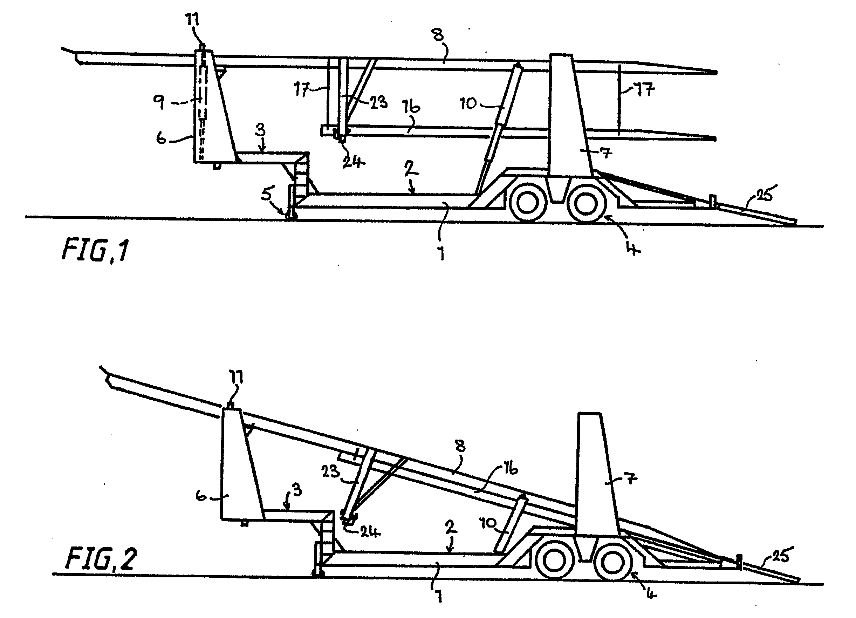

To load the trailer the middle deck is first raised to the underside of the top deck. Top deck pawls 13 are released and rear rams 10 are retracted to lower the rear of the top deck (Fig. 2). Ramps 25 are connected and the top deck is loaded. The top deck is then raised and the height of the middle deck is adjusted by rams 22 to first load the front deck 3 and then the middle deck itself, again using the ramps 25. The top and middle decks are then raised fully and the ramps are connected to the bottom deck so that this too can be loaded. The ramps are then stowed inside the chassis. The top and middle decks can now be lowered with the pawls released to achieve the lowest possible travelling height. The pawls are then re-engaged and nuts 11 and screws 24 tightened to lock the decks for travelling.

The trailer is unloaded in the reverse sequence.

The middle deck could be raised up to the top deck so that the trailer could be used as a conventional two deck transporter.

## Claims

1. A transporter for motor vehicles, comprising a wheeled chassis (1) including a lower deck (2) and a raised forward deck (3), an upper deck (8) supported from the chassis and arranged such that its rear end can be lowered for loading and unloading, and a middle deck (16) which is positioned vertically between the upper and lower decks and is adjustable in height, characterised in that the forward end of the middle deck (16) ends in close proximity to the rear end of the forward deck (3) enabling vehicles to be loaded on and off said forward deck via the middle deck.

2. A trailer according to Claim 1, in which the middle deck (16) is suspended from the upper deck (8) by flexible elements (17) operated by rams (22).

3. A trailer according to Claim 1 or 2, in which the upper deck (8) can be raised and lowered at both ends.

4. A trailer according to Claim 3, in which the upper deck (8) is raised and lowered by rams (9, 10) coupled between the upper deck and the chassis (1) and mounted with their cylinders uppermost.

5. A trailer according to any preceding claim, in which the upper deck (8) is supported from the chassis by front and rear pairs of columns (6, 7) upstanding from the chassis.

6. A trailer according to Claim 5, in which the middle deck (16) is guided for raising and lowering and located in a fore and aft direction rearwardly by the rear pair of columns (7) and forwardly by a pair of supports (23) extending downwardly form the upper deck (8).

7. A trailer according to Claim 5 or 6, in which the rear columns (7) each carry a ratchet formation (12) and the upper deck (8) is provided with pawls (13) arranged to co-operate with the ratchet formations such that they permit the upper deck (8) to be moved in an upward direction only.

8. A trailer according to Claim 7, in which the middle deck (16) is also provided with pawls (13) which co-operate with the ratchet formations (12) to permit the middle deck to be moved in an upward direction only.

9. A trailer according to Claim 7 or 8, including devices (15) for moving the pawls (13) of the respective deck out of engagement with the ratchet formations (12) to permit that deck to be lowered.

## Patentansprüche

1. Transporter für Motorfahrzeuge, bestehend aus einem mit Rädern versehenen Rahmen (1), umfassend ein Unterdeck (2) und ein angehobenes Vorderdeck (3), ein Oberdeck (8), das vom Rahmen abgestützt und derart angeordnet ist, daß sein Hinterende zum Be- und Entladen abgesenkt werden kann, und ein Mitteldeck (16), das vertikal zwischen Ober- und Unterdeck angeordnet ist und höhenverstellbar ist, dadurch gekennzeichnet, daß das vordere Ende des Mitteldecks (16) sehr nahe dem hinteren Ende des Vorderdecks (3) endet, sodaß das Auf- und Abladen von Fahrzeugen auf dem Vorderdeck über das Mitteldeck ermöglicht ist.

2. Anhänger nach Anspruch 1, worin das Mitteldeck (16) vom Oberdeck (8) über durch Kolben (22) betätigte flexible Elemente (17) abgehängt ist.

3. Anhänger nach Anspruch 1 oder 2, worin das Oberdeck (8) an beiden Enden angehoben und abgesenkt werden kann.

4. Anhänger nach Anspruch 3, worin das Oberdeck (8) mittels Kolben (9, 10) angehoben und gesenkt wird, die zwischen Oberdeck und Rahmen (1) eingebaut sind, und deren Zylinder an der höchsten Stelle montiert sind.

5. Anhänger nach einem der vorhergehenden Ansprüche, worin das Oberdeck (8) auf dem Rahmen durch ein vom Rahmen aufstehendes vorderes und hinteres Säulenpaar (6, 7) abgestützt ist.

6. Anhänger nach Anspruch 5, worin das Mitteldeck (16) heb- und senkbar geführt und in der Fahrtrichtung hinten durch das hintere Säulenpaar und vorne durch ein Paar am Oberdeck (8) nach unten ragende Träger (23) fixiert ist.

7. Anhänger nach Anspruch 5 oder 6, worin die hinteren Säulen (7) jeweils ein Zahngesperre (12) tragen und das Oberdeck (8) mit Klinken (13) versehen ist, die mit dem Zahngesperre derart zusammenwirken, daß sie nur eine Aufwärtsbewegung des Oberdecks (8) zulassen.

8. Anhänger nach Anspruch 7, worin das Mitteldeck (16) ebenfalls mit Klinken (13) versehen ist, die mit den Zahngesperren (12) derart zusammenwirken, daß das Mitteldeck nur aufwärtsbewegbar ist.

9. Anhänger nach Anspruch 7 oder 8, der Einrichtungen (15) zum Ausrücken der Klinken (13) des betreffenden Decks aus dem Eingriff in die Zahngesperre (12) aufweist, sodaß das Deck abgesenkt werden kann.

## Revendications

1. Véhicule pour transporter des automobiles, comprenant un châssis (1) à roues avec une plate-forme inférieure (2) et une plate-forme avant (3) surélevée, une plate-forme supérieure (8) supportée par le châssis et agencée de manière que son extrémité arrière puisse être abaissée pour le chargement et de déchargement, ainsi qu'une plate-forme médiane (16) qui est disposée verticalement entre les plates-formes supérieure et inférieure et est ajustable en hauteur, caractérisé en ce que l'extrémité avant de la plate-forme médiane (16) se termine à proximité immédiate de l'extrémité arrière de la plate-forme avant (3), ce qui permet de charger des automobiles sur la plate-forme avant et de les en décharger via la plate-forme médiane.

2. Remorque selon la revendication 1, dans laquelle la plate-forme médiane (16) est suspendue à la plate-forme supérieure (8) des éléments flexibles (17) manœuvrables par des verins (22).

3. Remorque selon la revendication 1 ou 2, dans laquelle la plate-forme supérieure (8) peut être relevée et abaissée aux deux extrémités.

4. Remorque selon la revendication 3, dans laquelle la plate-forme supérieure (8) est relevée et abaissée par des verins (9, 10) montés entre la plate-forme supérieure et le châssis (1) et avec leurs cylindres en haut.

5. Remorque selon l'une quelconque des revendications précédentes, dans laquelle la plate-forme supérieure (8) est supportée par le châssis par l'intermédiaire de paires avants et arrières de montants (6, 7) dirigés vers le haut à partir du châssis.

6. Remorque selon la revendication 5, dans laquelle la plate-forme médiane (16) est guidée pour le relevage et l'abaissement et positionnée dans le sens avant-arrière par les montants arrières (7) et, à l'avant, par une paire de supports (23) s'étendant vers le bas depuis la plate-forme supérieure (8).

7. Remorque selon la revendication 5 ou 6, dans laquelle les montants arrières (7) portent chacun une crémaillère (12) ou un dispositif semblable et la plate-forme supérieure (8) est pourvue de cliquets (13) agencés pour coopérer avec les crémaillères, de manière à permettre seulement le déplacement vers le haut de la plate-forme supérieure (8.

8. Remorque selon la revendication 7, dans laquelle la plate-forme médiane (16) est également pourvue de cliquets (13) qui coopèrent avec les crémaillères (12) de manière à permettre seulement le déplacement vers le haut de la plate-forme médiane.

9. Remorque selon la revendication 7 ou 8, comprenant des dispositifs (15) pour dégager les cliquets (13) des plates-formes correspondantes des crémaillères (12) afin de permettre l'abaissement de la plate-forme considérée.

FIG,1

FIG,2

EP 0 196 924 B1

EP 0 196 924 B1

FIG.3

FIG.4

FIG.5